**Europäisches Patentamt**

**European Patent Office**

**Office européen des brevets**

(19)

(11) Veröffentlichungsnummer : **0 481 114 B1**

(12) # EUROPÄISCHE PATENTSCHRIFT

(45) Veröffentlichungstag der Patentschrift :
**19.01.94 Patentblatt 94/03**

(51) Int. Cl.$^5$ : **B60P 1/28**

(21) Anmeldenummer : **90119965.3**

(22) Anmeldetag : **18.10.90**

(54) **Entriegelbares Kipplager der Kippbrücke eines Dreiseitenkippers.**

(43) Veröffentlichungstag der Anmeldung :
**22.04.92 Patentblatt 92/17**

(45) Bekanntmachung des Hinweises auf die
Patenterteilung :
**19.01.94 Patentblatt 94/03**

(84) Benannte Vertragsstaaten :
**AT BE CH DE DK ES FR GB GR IT LI LU NL SE**

(56) Entgegenhaltungen :
**DE-U- 1 844 515**
**GB-A- 1 517 993**
**GB-A- 2 106 049**

(73) Patentinhaber : **Hunger, Walter, Dr.-Ing.**
**Otto-Nagler-Strasse 13**
**D-97074 Würzburg (DE)**

(72) Erfinder : **Hunger, Walter, Dr.-Ing.**
**Otto-Nagler-Strasse 13**
**D-97074 Würzburg (DE)**

(74) Vertreter : **Nix, Frank Arnold, Dr.**
**Kröckelbergstrasse 15**
**D-65193 Wiesbaden (DE)**

## Beschreibung

Die vorliegende Erfindung bezieht sich auf ein entriegelbares Kipplager der Kippbrücke eines Dreiseitenkippers.

Derartige Kipplager machen es möglich, die Kippbrücke mit dem von ihr getragenen Pritschenkasten wahlweise nach links, hinten oder rechts zu kippen, wozu an den vier Ecken der Kippbrücke je ein solches entriegelbares Kipplager vorgesehen ist. Das Lösen der rechten Kipplager gestattet ein Kippen nach links um die linke Längsachse; das Lösen der vorderen Kipplager gestattet ein Kippen nach hinten um die hintere Querachse und das Lösen der linken Kipplager gestattet ein Kippen nach rechts um die rechte Längsachse.

Dabei müssen die vorderen Kipplager ein Kippen lediglich um die jeweilige Längsachse gestatten, während die hinteren Kipplager eine Kippen sowohl um die jeweilige Längsachse als auch um die Querachse gestatten müssen. Ein derartiges Kipplager ist z.D. bekannt aus GB-A-2 106 049.

Andere bekannte entriegelbaren Kipplager sind meist ausgebildet in Form von an der Kippbrücke befestigten, nach unten offenen gabelartigen Beschlägen, die beim Absenken fahrgestellfeste, in Richtung der jeweiligen Längsachse verlaufende Bolzen umgreifen und dadurch verriegelt sind, daß in Bohrungen der unteren Enden der Gabelschenkel ein Riegelstift eingesteckt ist, der zum Lösen des Kipplagers von Hand herauszuziehen ist.

Als Nachteil dieser Ausbildung kann angesehen werden die Notwendigkeit des Entriegelns und Verriegelns einzeln von Hand. Diese Notwendigkeit birgt aber sogar Gefahren, denn wenn die Bedienungsperson mehr als zwei Kipplager löst oder gelöst läßt, kann bei der Betätigung des Hydraulikzylinders zum Kippen der Kippbrücke diese in eine unkontrollierte und gefährliche Lage geraten. Auf jeden Fall erfordert die einzeln von Hand vorzunehmende Ent- und Verriegelung der Kipplager eine Denkarbeit und eine Aufmerksamkeit der Bedienungsperson, die nicht immer vorausgesetzt werden kann. Genügend Unfälle sind bekannt.

Aufgabe der vorliegenden Erfindung ist die Schaffung eines entriegelbaren Kipplagers der Kippbrücke eines Dreiseitenkippers, das einfach und bequem zu bedienen ist und sich zur Einrichtung einer Bedienungsfehler ausschließenden Fernbedienung eignet. Auf diese Weise kann eine neue Generation von Dreiseitenkippern gebaut werden, die nicht mehr erfordern, daß der Fahrer um das Fahrzeug herumgeht, um mühsam die Kippbereitschaft herzustellen, sondern bei denen der Kippvorgang bequem und einfach aus dem Fahrerhaus gesteuert werden kann.

Die Lösung der gestellten Aufgabe ergibt sich aus den Patentansprüchen.

Die Erfindung wird nachfolgend durch die Beschreibung eines Ausführungsbeispiels an Hand der beigegebenen Zeichnungen weiter erläutert. Es zeigt

Fig. 1 die rückwärtige Ansicht eines Dreiseitenkippers;

Fig. 2 die teilgeschnittene rückwärtige Ansicht des hinteren linken Kipplagers;

Fig. 3 den Schnitt III-III gemäß Fig. 2;

Fig. 4 den Schnitt IV-IV gemäß Fig. 2;

Fig. 5 den Schnitt V-V gemäß Fig. 3.

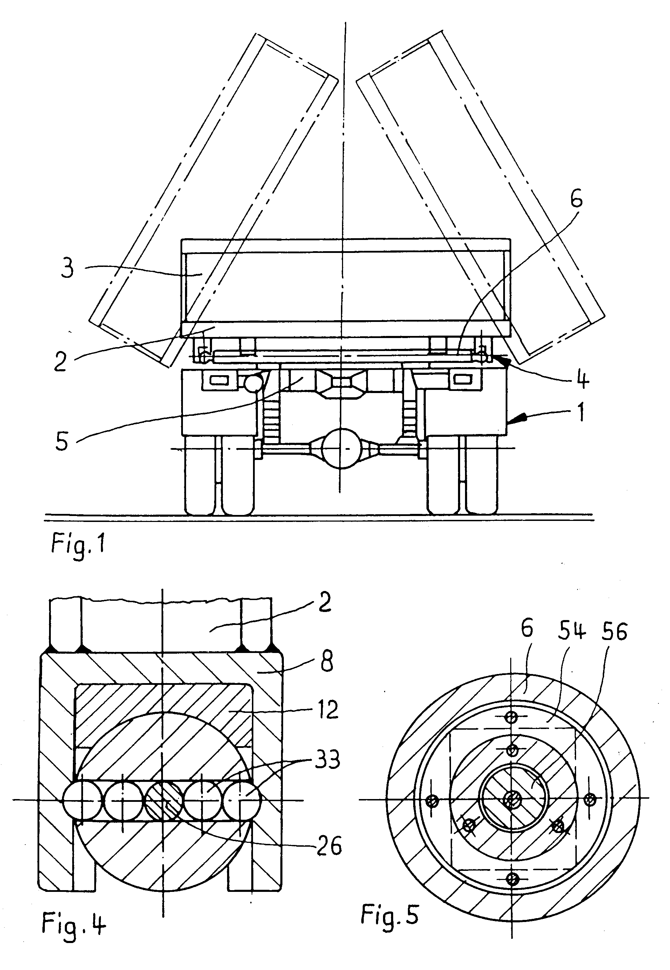

Der Dreiseitenkipper 1 hat einen von einer Kippbrücke 2 getragenen Pritschenkasten 3. Dieser ist mit der Kippbrücke 2 mittels unter den vier Ecken des Pritschenkastens befindlichen Kipplagern 4 um drei Achsen kippbar, nämlich eine durch die zwei linken Kipplager gebildete linke Längsachse, wobei die beiden rechten Kipplager entriegelt sein müssen, eine durch die zwei rechten Kipplager gebildete rechte Längsachse, wobei die beiden linken Kipplager entriegelt sein müssen (diese Kippstellungen sind in Fig. 1 gestrichelt angedeutet) und eine durch die zwei hinteren Kipplager gebildete hintere Querachse, wobei die beiden vorderen Kipplager entriegelt sein müssen.

Die vorderen Kipplager müssen deshalb eine Schwenkung nur um die jeweiligen Längsachsen erlauben, während die hinteren Kipplager Schwenkungen sowohl um die jeweilige Längsachse, als auch um die von ihnen definierte Querachse erlauben müssen.

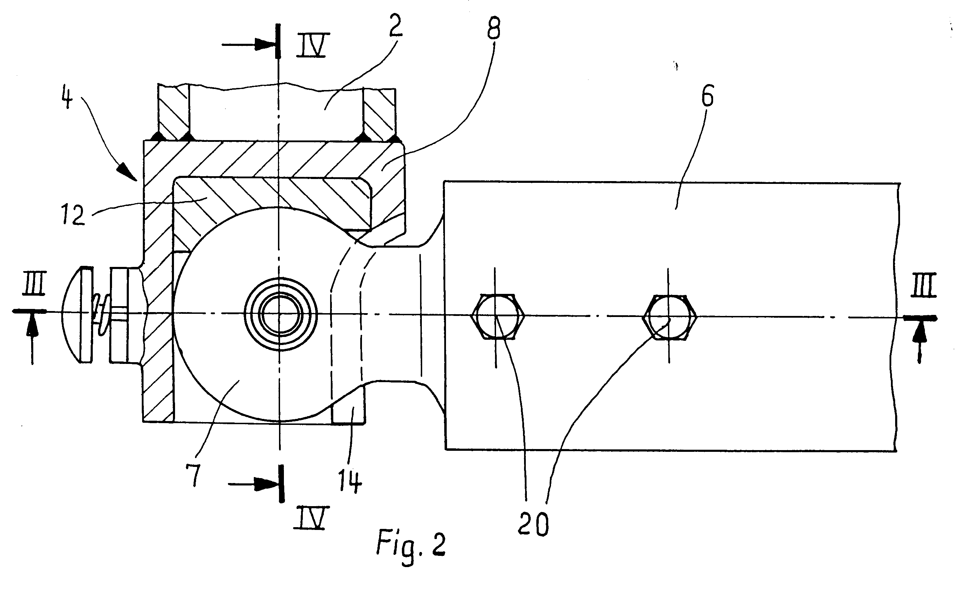

Fig. 2 zeigt das linke hintere Kipplager in einer teilgeschnittenen Ansicht von hinten. Am Fahrgestell 5 des Dreiseitenkippers 1 ist ein in Querrichtung verlaufender Träger 6 befestigt, an dessen beiden Enden Stützköpfe 7 vorragen. Im gezeigten Ausführungsbeispiel ist der Stützkopf 7 kugelförmig; er kann auch in Form eines kurzen Zylinders ausgebildet sein, dessen Achse in Längsrichtung verläuft.

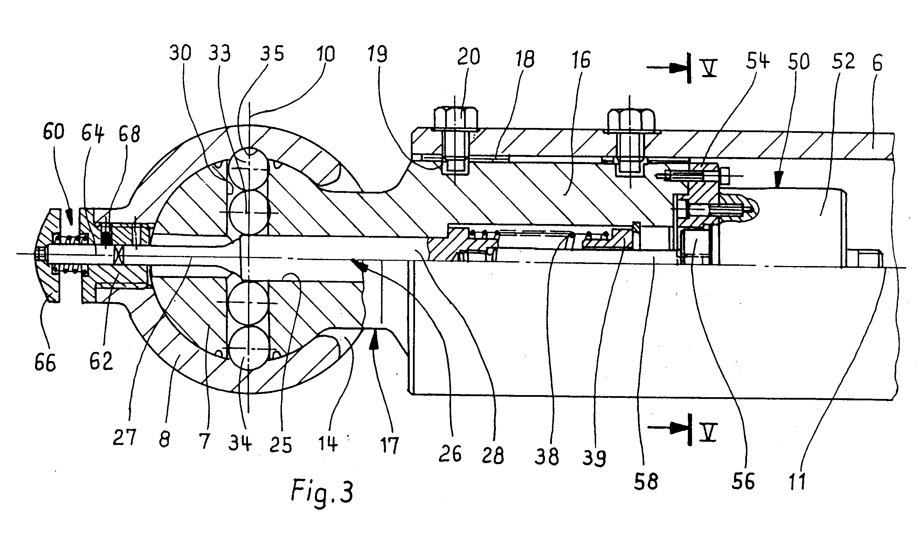

An der Kippbrücke 2 ist ein zugehöriges Lagergehäuse 8 befestigt, welches auf den Stützkopf 7 absenkbar und mit diesem unter Belassung eines rotatorischen Freiheitsgrades um die Längsachse 10 (Fig. 3) verriegelbar ist. Im Lagergehäuse oben ist eine Gleiteinlage 12 befestigt, welche den oberen Bereich des Stützkopfs 7 umfaßt und eine dämpfende Wirkung hat sowie für eine wartungsfreie Gleitpaarung sorgt. Unten ist das Lagergehäuse 8 offen und seine zum Träger 6 gewandte Innenwand hat einen Ausschnitt 14, durch den der Hals des Stützkopfs 7 greifen kann.

Der Stützkopf 7 hat gegenüber seinem Träger 6 einen rotatorischen Freiheitsgrad um die Querachse 11.

Hierzu ist der Träger 6 ein Rohr, in das ein einstückig mit dem Stützkopf 7 ausgebildeter zylindrischer Stützkörper 16 drehbar, aber axial unverschieblich eingesteckt ist. Der Stützkopf 7 und der Stützkörper 16 mit dem zwischen ihnen befindlichen Übergangs-Halsabschnitt bilden die Stützkopf-Baueinheit 17.

In einen verbleibenden Ringspalt sind zwei Gleitringeinlagen 18 eingesetzt, welche für eine wartungsfreie Drehlagerung des Stützkörpers 16 im Träger 6 sorgen. Die axiale Unverschieblichkeit des Stützkörpers 16 ist dadurch gesichert, daß in dessen zylindrischer Außenfläche zwei umlaufende Nuten 19 eingearbeitet sind, in deren jede das vordere Ende wenigstens einer Formschraube 20 greift, die in ein Gewindeloch des Trägers 6 eingeschraubt ist.

Durch die Stützkopf-Baueinheit 17 verläuft in Axialrichtung (= Richtung der Kippquerachse 11) ein durchgehender Zentralkanal 25, in dem verschieblich ein abgestufter Spreizstab 26 sitzt, dessen nach außen weisendes Vorderende 27 den kleineren Durchmesser aufweist und abgerundet in das Hinterende 28 übergeht, dessen Durchmesser dem des Zentralkanals 25 in diesem Bereich entspricht.

Der Zentralkanal 25 ist durchkreuzt von einer durch den Stützkopf 7 in Richtung der Kipp-Längsachse 10 durchgehenden Querbohrung 30. In dieser sitzt beidseits des Spreizstabs 26 je ein Riegelelement 33 mit abgerundeten Enden, vorliegend in Form von zwei Riegelkugeln 34. Die Abstufung des Spreizstabs 26, d.h. die Übergangsstelle zwischen deren Vorderende 27 und Hinterende 28, liegt im Bereich der Riegelelemente 33.

In der Innenwand des Lagergehäuses 8 ist an den den Enden der Querbohrung 30 gegenüberliegenden Stellen je eine Riegelausnehmung 35 in Form einer runden Grube ausgearbeitet, in die die äußeren Enden der Riegelelemente 33 eingreifen können.

In einem hinteren Abschnitt des Zentralkanals 25 ist eine Druckfeder 38 eingesetzt, deren vorderes Ende gegen einen Flansch des Spreizstabs 26 drückt und diesen in seine vordere Verriegelungsstellung zu drücken sucht, und deren hinteres Ende sich gegen einen im Stützkörper 16 festen Anschlag 39 stützt.

Ein Verschiebeantrieb 50 des Spreizstabs 26 besteht aus einem Elektromagneten 52, der mittels einer Befestigungszwischenplatte 54 am hinteren Ende des Stützkörpers 16 angeschraubt ist und dessen Anker 56 über eine Zugstange 58 mit dem Spreizstab 26 verbunden ist. Bei Erregung des Elektromagneten 52 zieht dieser den Spreizstab entgegen der Wirkung der Feder 38 in seine hintere Freigabestellung.

Eine von Hand zu betätigende Entriegelungsvorrichtung 60 befindet sich am Lagergehäuse 8 im Verlauf der Querachse 11. Sie besteht aus einem in das Lagergehäuse 8 eingeschraubten Buchse 62, in der ein federbeaufschlagter Entriegelungsbolzen 64 durch Betätigung eines Handgriffs 66 zwischen zwei durch eine Bajonettverriegelung 68 festgelegten Stellungen vor und zurück bewegt und in diesen festgelegt werden kann.

Im Normalfall und insbesondere während der Fahrt befindet sich das beschriebene Kipplager in seinem verriegelten Zustand, in dem der Elektromagnet 52 stromlos ist und der Spreizstab 26 unter der Wirkung der Feder 38 in seine aus Fig. 3 ersichtliche Verriegelungsstellung vorgeschoben ist, in der er die die Riegelelemente 33 darstellenden Riegelkugeln 34 nach außen drückt, sodaß deren äußere Enden in die Riegelausnehmungen 35 greifen. Auf diese Weise ist das Lagergehäuse mit dem Stützkopf 7 verriegelt und kann nicht von diesem abgehoben werden.

Wenn sämtliche vier Kipplager auf diese Weise verriegelt sind, ist die Kippbrücke 2 fest mit dem Fahrgestell 5 verbunden.

Soll der Pritschenkasten 3 nach links gekippt werden, so werden die Elektromagnete 52 der beiden rechten Kipplager an Spannung gelegt. Dadurch wird in jedem derselben der Anker 56 eingezogen und zieht über die Zugstange 58 den Spreizstab 26 in seine hintere Freigabestellung, in der sein hinteres Ende 28 großen Durchmessers aus dem Bereich der Querbohrung 30 zurückwandert. Jetzt befindet sich nur noch das Vorderende 27 kleinen Durchmessers in der Kreuzungsstelle des Zentralkanals 25 mit der Querbohrung 30, sodaß die Riegelelemente 33 nach innen wandern können, bis ihre äußeren Enden vollständig als den Riegelausnehmungen 35 heraustreten und die Verriegelung aufgehoben ist. Jetzt kann das Lagergehäuse 8 nach oben von dem Stützkopf 7 abgehoben werden.

Die Elektromagnete 52 der beiden linken Kipplager werden nicht erregt, sodaß diese verriegelt bleiben. In dieser Stellung bleibt dem Lagergehäuse 8 gegenüber dem Stützkopf 7 nur ein rotatorischer Freiheitsgrad um die Kipp-Längsachse 10.

Danach wird dem Hydraulikzylinder zwischen Fahrgestell 5 und Kippbrücke 2 (nicht dargestellt) Hydraulikflüssigkeit unter Druck zugeführt und dessen ausfahrende Kolbenstange schwenkt die Kippbrücke mit dem Pritschenkasten 3 um die linke Kipp-Längsachse 10, wie in Fig. 1 auf der linken Seite gestrichelt angedeutet. Hierbei wird der genannte rotatorische Freiheitsgrad des Lagergehäuses 8 um die Kipp-Längsachse 10 genutzt, wobei die Gleiteinlage 12 auf dem oberen Bereich des Stützkopfs 7 gleitet.

Das Kippen der Kippbrücke nach rechts verläuft analog.

Zum Kippen der Kippbrücke nach hinten werden die beiden vorderen Kipplager durch Ansteuerung ihrer Elektromagnete 52 in die Freigabestellung verbracht, während die beiden hinteren Kipplager verriegelt bleiben. Die Beaufschlagung des Hydraulikzylinders zwischen Fahrgestell und Kippbrücke führt jetzt zu einem Kippen der letzteren um die Kipp-Querachse 11, wobei die gegenseitige Lage zwischen Lagergehäuse 8 und Stützkopf 7 unverändert bleibt, aber der rotatorische Freiheitsgrad der Stützkopf-Baueinheit 17 um die Kipp-Querachse 11 genutzt wird, indem der Stützkörper 16 sich im Rohr des Trägers 6 dreht.

Es versteht sich, daß bei den beiden vorderen Kipplagern eine Drehbarkeit des Stützkopfs 7 um die Querachse 11 entbehrlich ist und deshalb die Drehlagerung des Stützkörpers 16 entfällt. Hier können die Stützköpfe 7 auf geeignete Weise starr am Fahrgestell 5 befestigt sein.

Die Steuerung sowohl der vier Verschiebeantriebe 50, vorliegend also der Elektromagnete 52, als auch der den Hydraulikzylinder speisenden Hydraulikpumpe erfolgt im Fahrerhaus des Dreiseitenkippers 1, wobei in der Bedienungskonsole vier Anzeigemittel, z.B. Lampen, vorgesehen sind, die über den Verriegelungszustand bzw. die Freigabestellung der Kipplager Auskunft geben. Eine entsprechende Schaltung läßt nur die für die drei Kippmöglichkeiten notwendigen Kombinationen bzw. die Verriegelung aller vier Kipplager zu.

Bei Bedarf kann das Kipplager auch von Hand in die Entriegelungsstellung überführt werden, wozu der Entriegelungsbolzen 64 der Handentriegelungsvorrichtung 60 durch Betätigung des Handgriffs 66 einzudrücken und in der eingedrückten Stellung mittels der Bajonettverriegelung 68, also durch eine kleine Drehung in der eingedrückten Lage, zu verriegeln ist. Dadurch wird der Spreizstab 26 ebenfalls in seine hintere Freigabestellung zurückgestoßen, sodaß das Lagergehäuse 8 freikommt. In dieser Stellung muß die Stoßstelle zwischen den einander berührenden Stirnenden des Entriegelungsbolzens 64 und des Vorderendes 27 des Spreizstabs 26 mit der Trennfläche zwischen Lagergehäuse 8 und Stützkopf 7 fluchten. Dann kann das Lagergehäuse 8 vom Stützkopf 7 abgehoben werden. Zum Wiederabsenken des Gehäuses 8 auf den Stützkopf 7 kann das bei nicht angesteuertem Elektromagnet 52 vorstehende Vorderende 27 durch eine rampenartige Abschrägung des Lagergehäuses 8 oder eine andere geeignete Maßnahme zurückgeschoben werden.

Bezugszeichenliste

| 1 | Dreiseitenkipper | 27 | Vorderende |
|---|---|---|---|
| 2 | Kippbrücke | 28 | Hinterende |
| 3 | Pritschenkasten | 30 | Querbohrung |
| 4 | Kipplager | 33 | Riegelelement |
| 5 | Fahrgestell | 34 | Riegelkugel |
| 6 | Träger | 35 | Riegelausnehmung |
| 7 | Stützkopf | 38 | Druckfeder |
| 8 | Lagergehäuse | 39 | Anschlag |
| 10 | Längsachse | 50 | Verschiebeantrieb |
| 11 | Querachse | 52 | Elektromagnet |
| 12 | Gleiteinlage | 54 | Befestigungszwischenplatte |
| 14 | Ausschnitt | 56 | Anker |
| 16 | Stützkörper | 58 | Zugstange |
| 17 | Stützkopf-Baueinheit | 60 | Handentriegelungsvorrichtung |
| 18 | Gleitringeinlage | 62 | Buchse |
| 19 | Nut | 64 | Entriegelungsbolzen |
| 20 | Formschraube | 66 | Handgriff |
| 25 | Zentralkanal | 68 | Bajonettverriegelung |
| 26 | Spreizstab | | |

**Patentansprüche**

1. Entriegelbares Kipplager (4) der Kippbrücke (2) eines Dreiseitenkippers (1),
gekennzeichnet durch einen in einem fahrgestellfesten Träger (6) drehbaren zylindrischen oder kugelförmigen Stützkopf (7)
und ein auf diesen absenkbares, an der Kippbrücke (2) befestigtes Lagergehäuse (8), dessen obere Innenfläche beim Absenken in flächige Berührung mit der oberen Oberfläche des Stützkopfs (7) tritt und das nach unten offen ist,
wobei in einem Zentralkanal (25) der Stützkopf-Baueinheit (17) ein längsverschieblicher abgestufter Spreizstab (26) untergebracht und mittels eines fernsteuerbaren Verschiebeantriebs (50) antreibbar ist und dieser zusammenwirkt mit zwei beidseits in in Richtung der Kipp-Längsachse (10) verlaufenden Querbohrungen (30) sitzenden verschieblichen Riegelelementen (33)
und wobei in den seitlichen Innenwänden des Lagergehäuses (8) gegenüber den Querbohrungen (30) Riegelausnehmungen (35) eingearbeitet sind, in die die äußeren Enden der Riegelelemente (33) eingreifen, wenn diese mittels des Spreizstabs (26) auseinandergespreizt sind.

2. Kipplager nach Anspruch 1, dadurch gekennzeichnet, daß die Enden der Riegelelemente (33) abgerundet sind.

3. Kipplager nach Anspruch 2, dadurch gekennzeichnet, daß die Riegelelemente (33) je zwei nebeneinanderliegende Riegelkugeln (34) darstellen.

4. Kipplager nach einem oder mehreren der vorhergehenden Ansprüche, dadurch gekennzeichnet, daß das vordere Ende (27) des Spreizstabs (26) den kleineren Durchmesser aufweist und durch eine Feder (38) im Sinne des Vorschiebens beaufschlagt ist, wobei sein hinteres Ende mit einem Elektromagneten (52) verbunden ist, welcher bei seiner Betätigung im Sinne des Zurückziehens wirkt.

5. Kipplager nach einem oder mehreren der vorhergehenden Ansprüche zur Anordnung an den beiden hinteren Ecken der Kippbrücke,
dadurch gekennzeichnet, daß die Stützkopf-Baueinheit (17) drehbar und axial unverschieblich im rohrförmig ausgebildeten Träger (6) gehalten ist.

6. Kipplager nach einem oder mehreren der vorhergehenden Ansprüche, dadurch gekennzeichnet, daß der Zentralkanal (25) der Stützkopf-Baueinheit (17) durchgehend ausgeführt ist und in die gegenüberliegende Wand des Lagergehäuses (8) eine handbetätigbare Entriegelungsvorrichtung (60) eingebaut ist, welche einen mit dem vorderen Stirnende des Spreizstabs (26) zusammenwirkenden Entriegelungsbolzen (64) aufweist, mit dem der Spreizstab (26) entgegen der Wirkung der Feder (38) in seine Entriegelungsstellung zurückgestoßen werden kann,
wobei die Stoßstelle zwischen Entriegelungsbolzen (64) und Spreizstab (26) in der Entriegelungsstellung in der Trennfläche zwischen der Innenwand des Lagergehäuses (8) und der zugewandten Oberfläche des Stützkopfs (7) liegt.

7. Kipplager nach Anspruch 6, dadurch gekennzeichnet, daß der Entriegelungsbolzen (64) mittels einer Bajonettverriegelung (68) in der die Handentriegelung bewirkenden Stellung arretierbar ist.

8. Kipplager nach einem oder mehreren der vorhergehenden Ansprüche, gekennzeichnet durch eine Fernsteuerung ihrer Spreizstab-Verschiebeantriebe derart, daß zum gewünschten Kippen der Kippbrücke jeweils die beiden erforderlichen Lager gelöst werden und die beiden anderen verriegelt bleiben.

9. Kipplager nach Anspruch 8, gekennzeichnet durch Signalmittel, insbesondere Anzeigelampen, zur Anzeige des Verriegelungs- bzw. Freigabezustands der vier Kipplager des Dreiseitenkippers.

10. Dreiseitenkipper mit an den vier Ecken Kippbrücke angebrachten entriegelbaren Kipplagern nach einem oder mehreren der vorhergehenden Ansprüche, gekennzeichnet durch eine Schaltung zur Ansteuerung der Kipplager, die nur die für die drei Kippmöglichkeiten wahlweise nach links, hinten oder rechts notwendigen Kombinationen zuläßt.

## Claims

1. Unlockable tipping bearing (4) of the dumping body (2) of a three-way tipper (1),
characterised by a cylindrical or spherical supporting head (7) adapted to rotate in a support (6) fixed to the chassis,
and a bearing housing (8) which can be lowered onto said supporting head (7) and which is attached to the dumping body (2) and whose upper inside face comes into contact with the upper surface of the supporting head (7) over a large area when said housing (8) is lowered, the latter being downwardly open,
a longitudinally displaceable, stepped expansion bar (26) being housed in a central conduit (25) in the constructional unit (17) incorporating the supporting head and being adapted to be driven by means of a remotely controllable shifting drive (50),
and said drive (50) cooperating with two displaceable interlock elements (33) sitting on either side in transverse bores (30) running in the direction of the longitudinal tipping axis (10),
and interlock recesses (35) being incorporated in the lateral inner walls of the bearing housing (8) opposite the transverse bores (30), into which recesses (35) the outer ends of the interlock elements (33) engage when same are splayed apart by means of the expansion bar (26).

2. Tipping bearing according to claim 1, characterised in that the ends of the interlock elements (33) are rounded.

3. Tipping bearing according to claim 2, characterised in that the interlock elements (33) are each two adjacent interlock balls (34).

4. Tipping bearing according to one or more of the preceding claims, characterised in that the front end (27) of the expansion bar (26) has the smaller diameter and is acted on by a spring (38) to push it forwards, its back end being joined to an electromagnet (52) which acts to pull it back when actuated.

5. Tipping bearing according to one or more of the preceding claims for arrangement at the two rear corners of the dumping body,
characterised in that the constructional unit (17) incorporating the supporting head is held rotatably and axially immovably in the tubular support (6).

6. Tipping bearing according to one or more of the preceding claims, characterised in that the central conduit (25) of the supporting-head unit (17) is continuous and into the opposite wall of the bearing housing (8) is fitted a manually operated unlocking device (60) which has an unlocking bolt (64) which cooperates with the front end of the expansion bar (26) and with which the expansion bar (26) can be thrust back into its unlocking position against the action of the spring (38),
the joint between the unlocking bolt (64) and the expansion bar (26) in the unlocking position being situated in the parting plane between the inner wall of the bearing housing (8) and the facing surface of the supporting head (7).

7. Tipping bearing according to claim 6, characterised in that the unlocking bolt (64) can be locked by means of a bayonet closure (68) in the position effecting manual unlocking.

8. Tipping bearing according to one or more of the preceding claims, characterised by a remote control for its expansion bar shifting drives, such that for the desired tipping of the dumping body the two bearings required are in each case released and the other two remain locked.

9. Tipping bearing according to claim 8, characterised by signalling means, more particularly indicator lamps, for indicating the locking or release condition of the four tipping bearings of the three-way tipper.

10. Three-way tipper with unlockable tipping bearings mounted at the four corners of the dumping body, according to one or more of the preceding claims, characterised by a circuit for triggering the tipping bearings which permits only the combinations necessary for the three tipping options, namely to the left, to the rear or to the right, as required.

**Revendications**

1. Palier de basculement (4) déverrouillable pour le châssis basculant (2) d'une benne (1) pouvant basculer de trois côtés, caractérisé par

   une tête d'appui (7) cylindrique ou sphérique qui peut tourner dans un support (6) solidaire du châssis de véhicule,

   et un corps de palier (8) qui est fixé sur le châssis basculant (2) et peut être amené sur la tête d'appui, dont la surface intérieure supérieure lors de son déplacement vient en contact surfacique avec la surface supérieure de la tête d'appui (7), lequel corps de palier est ouvert vers le bas,

   une tige de repoussement (26) étagée, mobile dans la direction longitudinale, étant montée dans un conduit central (25) de l'ensemble tête d'appui (17) et pouvant être déplacée au moyen d'un mécanisme d'entraînement (50) commandé à distance,

   la tige de repoussement coopérant avec deux organes de verrouillage (33) montés de part et d'autre dans des perçages transversaux (30) avec possibilité de déplacement dans la direction de l'axe longitudinal (10) de basculement,

   des cavités de verrouillage (35) étant aménagées en regard des perçages transversaux (30) dans les parois intérieures latérales du corps de palier (8), cavités dans lesquelles les extrémités extérieures des organes de verrouillage (33) pénètrent lorsque ceux-ci sont écartés par la tige de repoussement (26).

2. Palier de basculement selon la revendication 1, caractérisé par le fait que les extrémités des organes de verrouillage (33) sont arrondies.

3. Palier de basculement selon la revendication 2, caractérisé par le fait que les organes de verrouillage (33) sont constitués chacun par deux billes de verrouillage (34) disposées l'une à côté de l'autre.

4. Palier de basculement selon l'une ou plusieurs des revendications précédentes, caractérisé par le fait que l'extrémité antérieure (27) de la tige de repoussement (26) présente le diamètre le plus faible et est sollicitée par un ressort (38) dans le sens de sa sortie, l'extrémité arrière de la tige de repoussement étant liée à un électro-aimant (52) qui, lorsqu'il est actionné agit dans la direction de la rentrée de la tige.

5. Palier de basculement selon l'une ou plusieurs des revendications précédentes destiné à être monté dans les deux angles arrières du châssis basculant, caractérisé par le fait que l'ensemble tête d'appui (17) est monté avec possibilité de rotation mais sans possibilité de déplacement dans la direction longitudinale dans le support (6) en forme de tube.

6. Palier de basculement selon l'une ou plusieurs des revendications précédentes, caractérisé par le fait que le conduit central (25) de l'ensemble tête d'appui (17) est débouchant et qu'un dispositif de déverrouillage (60) actionné manuellement est monté dans la paroi en vis-à-vis du corps de palier (8), lequel dispositif de verrouillage présente un doigt de déverrouillage (64) qui coopère avec l'extrémité frontale antérieure de la tige de repoussement (26) et au moyen duquel la tige de repoussement (26) peut être repoussée dans sa position de déverrouillage à l'encontre de l'action du ressort (38), le point de contact entre le doigt de déverrouillage (64) et la tige de repoussement (26), en position de déverrouillage, étant situé dans le plan de séparation entre la paroi intérieure du corps de palier (8) et la surface en vis-à-vis de la tête d'appui (7).

7. Palier de basculement selon la revendication 6, caractérisé par le fait que le doigt de déverrouillage (64) peut être bloqué dans la position provoquant le déverrouillage manuel au moyen d'un système de verrouillage (68) à baïonnette.

8. Palier de basculement selon l'une ou plusieurs des revendications précédentes, caractérisé par un système de commande à distance de son mécanisme d'entraînement de la tige de repoussement agencé de manière telle que pour faire basculer le châssis basculant dans la direction souhaitée on libère les deux paliers concernés tandis que les deux autres paliers restent verrouillés.

9. Palier de basculement selon la revendication 8, caractérisé par des moyens d'indication, en particulier par des voyants lumineux, destinés à indiquer l'état verrouillé ou l'état déverrouillé des quatre paliers de basculement de la benne basculante.

10. Benne basculante pouvant basculer de trois côtés avec, disposés dans les quatre angles du châssis bas-

7

culant, des paliers de basculement déverrouillables selon une ou plusieurs des revendications précédentes, caractérisé par un circuit de commande des paliers de basculement qui n'autorise que les trois combinaisons, vers la gauche, vers l'arrière ou vers la droite, nécessaires aux trois possibilités de basculement.

Fig.1

Fig.4

Fig.5

Fig. 2

EP 0 481 114 B1

Fig.3

EP 0 481 114 B1